# EUROPEAN PATENT SPECIFICATION

(11) **EP 2 508 741 B1**
(45) Date of publication and mention of the grant of the patent: **05.08.2015**
(21) Application number: 12161950.6
(22) Date of filing: 29.03.2012
(51) Int. Cl.: F02M 21/02, F02B 43/00, F02D 41/00

(54) **Method and device for the diagnosis of gaseous fluid leakages in a fuel feed circuit of an engine driven vehicle**
Verfahren und Vorrichtung für die Diagnose von gasförmigen Flüssigkeitsleckagen in einem Kraftstoff-Zufuhrkreislauf eines motorbetriebenen Fahrzeugs
Procédé et dispositif pour le diagnostic de fuites de fluides gazeux dans un circuit d'alimentation en carburant d'un véhicule entraîné par moteur

(30) Priority: 04.04.2011 IT MI20110547
(43) Date of publication of application: 10.10.2012
(73) Proprietor: Landi Renzo S.P.A., 42025 Cavriago (RE) (IT)
(72) Inventor: Ceccarini, Daniele, 40138 Bologna (IT)
(74) Representative: Dondi, Silvia

(56) References cited:
- DE-A1- 10 004 463
- FR-A1- 2 840 025
- JP-A- 8 082 250
- JP-A- 2000 346 292

## Description

The present invention relates to a method and device for the diagnosis of gaseous fluid leakages in a fuel feed circuit of an internal combustion engine of a vehicle of the type operating both on liquid and on gaseous fuel, in accordance with the corresponding independent claims.

Particularly in recent years, the use by engine driven vehicle manufacturers of engine feed systems using gaseous fuel has been extended, whether this consists of LPG, CNG (methane), H2 (hydrogen) or mixtures of these gases. This is mainly due to the economical advantages for the user related to the use of such fuels, and to the lesser pollutant emissions of engines operating with such fuels.

For this reason, numerous engine vehicle manufacturers, whether automobiles, commercial vehicles or other vehicle types, offer a range of so-called bi-fuel vehicles, which enable the engine to be fed either with traditional liquid fuel (petrol, ethanol, petrol-ethanol mixtures, etc.) or with gaseous fuel (LPG, methane). The automobile industry is also known to be expending considerable energy in developing vehicles fed with hydrogen or hydrogen-methane mixtures (Hytane). The common characteristic of some of these fuels (used in gaseous form) is to be stored on the vehicle in liquid form under high pressure, within suitable tanks. This is the case with LPG, the pressure of which in the tank can be a number of bars. Moreover, in contrast with liquid fuels which are stored in tanks not under pressure and hence have to be injected into the explosion chamber of an engine cylinder in atomized liquid form, those gaseous fuels stored in the liquid phase are generally gasified before being injected. This gasification generally takes place within pressure reducer members which can be single stage or two-stage and are disposed between the tank and the engine fluid fuel (gas) injectors. These components form part of the circuit for feeding said fluid to the engine. In particular, the connection line between the tank and the injectors (usually connected to a common conduit) and through which the fuel is fed to these latter is divided into two branches by the reducer member (or simply reducer): a first branch or high pressure branch present between the tank and the reducer, and a second branch or low pressure branch between this latter and the injectors (or rather the common conduit to which these are connected). The high pressure branch comprises at least one valve member made to interrupt the feed when the engine is required to operate with the other fuel, such as petrol or the like, or when the engine is at rest.

Finally, the low pressure branch comprises a pressure measurement device. This latter, together with the controlled valve member (for example a solenoid valve) and each injector, is connected to a command and control unit which oversees the operation of the engine feed system.

Diagnostic methods and procedures are known able to sense possible gaseous fluid leakages within a fuel feed circuit for vehicles of the aforeindicated type, said methods being usually implemented in a feed circuit in which the reducer is of the single stage type. An example of this method is described in FR2840025 **(on which the preambles of the independent claims are based)** which describes a fuel feed circuit in accordance with the introduction to the main claim. In this circuit and according to our invention, the method implementation comprises sensing the pressure in the high pressure branch, i.e. only at the engine inlet. According to the known method, the leakage diagnosis is carried out in the feed circuit within a period in which the circuit injectors are closed, as in the case of a period following a stoppage in engine operation with gaseous fuel, or a period of deceleration or braking during which the engine is again set for gaseous fuel feed, but with the injector operation and hence with the gaseous fuel feed to the engine temporarily reduced.

In the test or diagnosis period, the injectors of the aforesaid circuit are closed and the engine operates with the other fuel. The controlled valve member is then closed and the pressure in the low pressure branch is measured.

Such a solution does not enable the pressure variation in the circuit to be measured rapidly within a short time and correctly, because the difference between the pressure in the low pressure branch thereof and atmospheric pressure can be too low to enable the leakage to be sensed with certainty. This is in fact the situation when the engine operates under idling conditions or conditions in which the method of the prior patent is implemented, in such situations the pressure in the low pressure branch being just higher than atmospheric pressure. Moreover with the method described in the prior French patent any leakages in the high pressure branch cannot be evaluated directly, but only indirectly with obvious possibilities of error.

JP 2000 346292 relates to a vaporizer for liquefied gas, a vaporization method for liquefied gas and LPG bulk storage tank. According to this document, an atmosphere gas over the liquid surface of liquefied gas such as LPG in a bulk storage tank is taken out by a pipe, its pressure is reduced by a natural vaporizing mean, two-stage primary regulator, and the pressure is finally regulated by a two-stage secondary regulator to be fed to a consumer side. Then, the maximum flow rate is regulated to a prescribed vaporization quantity preset by a constant flow valve. The liquefied gas in the bulk storage tank is introduced to a vaporizer, or a direct forced vaporizing means by a pipe in its liquid state and vaporized being heated by a vaporization heat source. The pressure is finally regulated by the two-stage secondary regulator to feed to the consumer side.

An object of the present invention is to provide a method and a corresponding device able to implement the (gaseous) fluid leakage diagnosis in a circuit feeding fuel to a vehicle engine which represent improvements compared with known methods and devices.

A particular object of the invention is to provide a method and device of the aforesaid type which enable the leakage diagnosis to be carried out in a very short time, while ensuring correct evaluation of any such leakages.

Another object of the invention is to enable a diagnosis which is conducted frequently during vehicle use and consequently is implemented both if the main use of the vehicle is characterised by long travel runs (for example motorway travel), and if the vehicle main use is characterised by short town runs or mixed travel.

A further object of the invention is to effect a diagnosis which can also be integrated with gaseous fuel (for example LPG) feed systems or plants for engine driven vehicles which are already circulating by means of an update of the diagnostic functions of the unit controlling the injection of this fluid into the engine. These and other objects which will be evident to the expert of the art are attained by a method and device in accordance with the accompanying claims.

The present invention will be better understood from the accompanying drawings, which are provided by way of non-limiting example and in which:
Figure 1 is a block diagram of a gaseous fuel feed circuit for engine driven vehicles using a two stage pressure reducer;
Figure 2 is a section through a two stage reducer used in the circuit of Figure 1 in a particular embodiment shown by way of non-binding example;
the diagram of Figure 3 shows schematically the pressure variations within the various circuit sections;
Figure 4 is an exemplified block diagram of an advantageous application of a diagnostic procedure according to the invention;
Figures 5a and 5b represent the simplified variation of the pressures measured or processed in the circuit of Figure 2, under normal conditions without any fuel leakage in the circuit, where Figure 5a also shows times in addition to the simplified pressure variation, whereas Figure 5b displays the allowable pressure variation range (ΔPᵣₐᵢₗ) beyond which a leakage is diagnosed;
Figures 6a and 6b represent the simplified variation of the pressures measured or processed in the circuit of Figure 3, in the presence of abnormal conditions which cause fuel leakages, where Figure 6a also shows times in addition to the simplified pressure variation, whereas Figure 6b displays the allowable pressure variation range (ΔPᵣₐᵢₗ) beyond which a leakage is diagnosed.

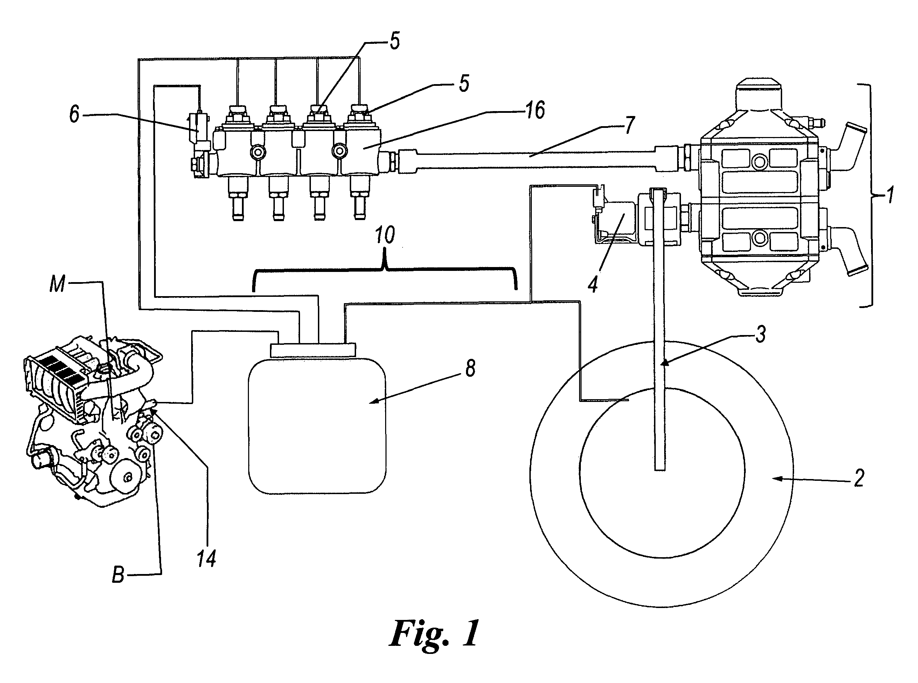

With particular reference to Figure 1, a circuit for feeding gaseous fuel to a vehicle engine M comprises a known two stage pressure reducer 1, a tank 2 for gaseous fuel possibly contained in liquid form, a first high pressure branch 3 (defined by a complex of pipes) which transfers the fuel from the tank 2 to the two stage pressure reducer 1; the branch 3 comprises a solenoid valve 4 for fuel shutoff positioned upstream of the two stage pressure reducer. A complex of fuel injectors 5 integrated into a common conduit 16, feeds the gaseous fuel into the engine; this complex is associated with a pressure measurement device 6 positioned on a low pressure branch 7 of the feed circuit which transfers the fuel leaving the two stage reducer 1 to the fuel injectors 5. This branch 7 and the conduit which defines it represent a common conduit for the injectors.

All these components are controlled and commanded by an electronic control unit 8 connected to them by relative interconnecting cables 10; this control unit 8 executes the diagnostic procedure according to the invention.

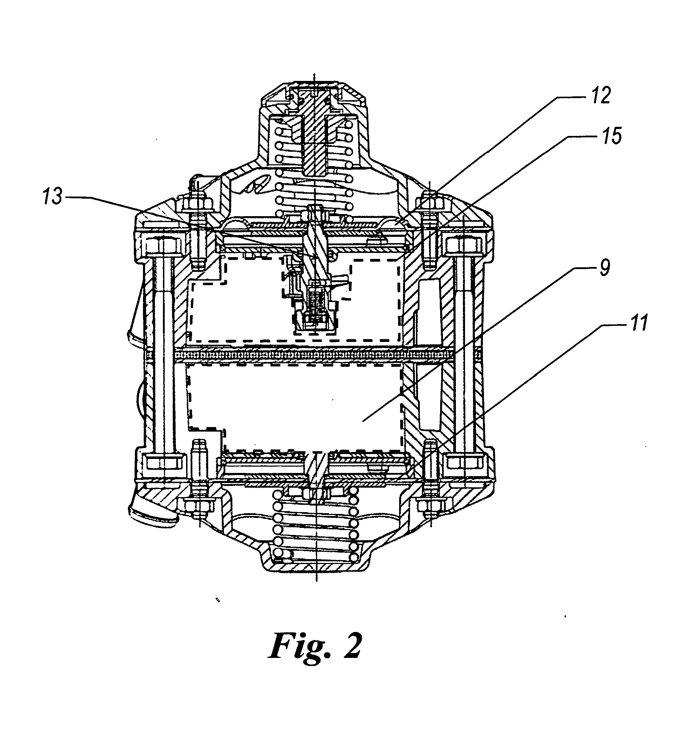

Finally, a temperature sensor 14 is mounted in the base B of the engine M, said sensor 14 being also connected to the control unit 8. The interior of the two stage reducer 1 can be schematically seeb in Figure 2 where two regulation stages can be identified, indicated respectively by 9 for the high pressure stage and 15 for the low pressure stage. Each stage bases its operation on a regulating membrane (indicated by 11 and 12 and defining respectively the membrane of the high pressure first stage 9 and that of the low pressure second stage 15); the stages 9 and 15 are connected by an interconnection valve 13 of known type. As can be seen from Figure 2, in known manner the interconnection valve 13 between the two stages is operated by the second stage membrane 12. When the pressure differential acting on the second stage membrane 12 is less than a pressure defined at the design stage, the interconnection valve 13 between the two stages is opened and the two stages are hydraulically connected. This situation occurs when the engine operates at high loads (such as during acceleration) and requires a constant gaseous fuel feed. The reducer 1 comprises other known components, shown in Figure 2, which however are not described as this is not necessary for understanding the invention.

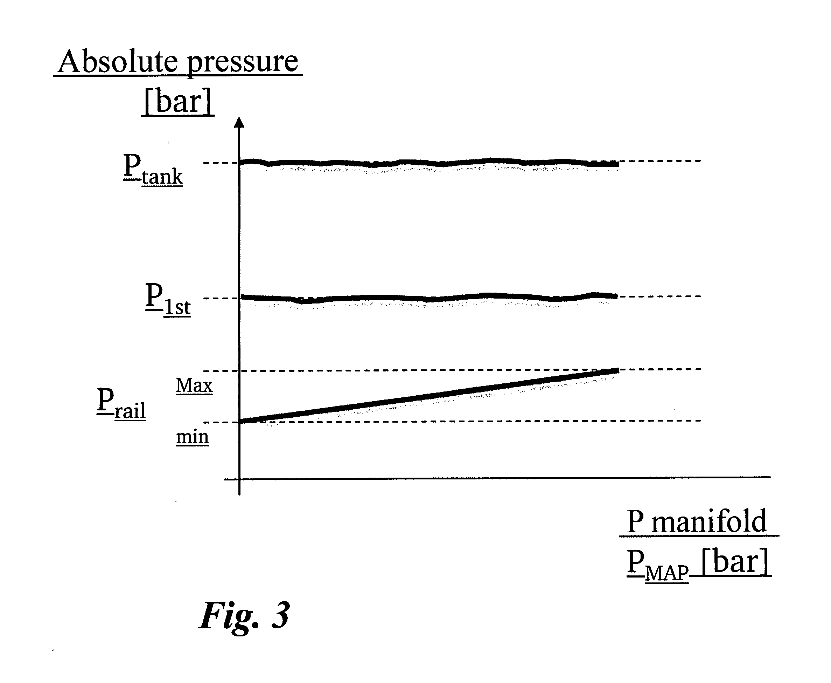

With reference to Figure 3, Pₜₐₙₖ represents the pressure of the fuel in the tank which is in the gaseous state in the case of methane or two-phase liquid operation and gas in the case of LPG feed. The pressure in the pressure tank is of the order of several bar if the fuel is LPG or of several tens of bar if the fuel is methane. This pressure is also present in the high pressure branch 3 and at the inlet of the solenoid shutoff valve 4. The tank pressure Pₜₐₙₖ is substantially constant during the transient variations of the engine load.

When the engine is fed by gaseous fuel, the solenoid valve 4 is opened, enabling the fuel to enter the first stage 9 of the reducer 1 and to expand and gasify therein. The high pressure first stage 9 of the reducer is designed to reduce the fuel pressure from that of the tank to a lower pressure Pᵢₛₜ. As a non-limiting example, this pressure can be of about 2.6 bar absolute and be virtually constant as the engine load varies.

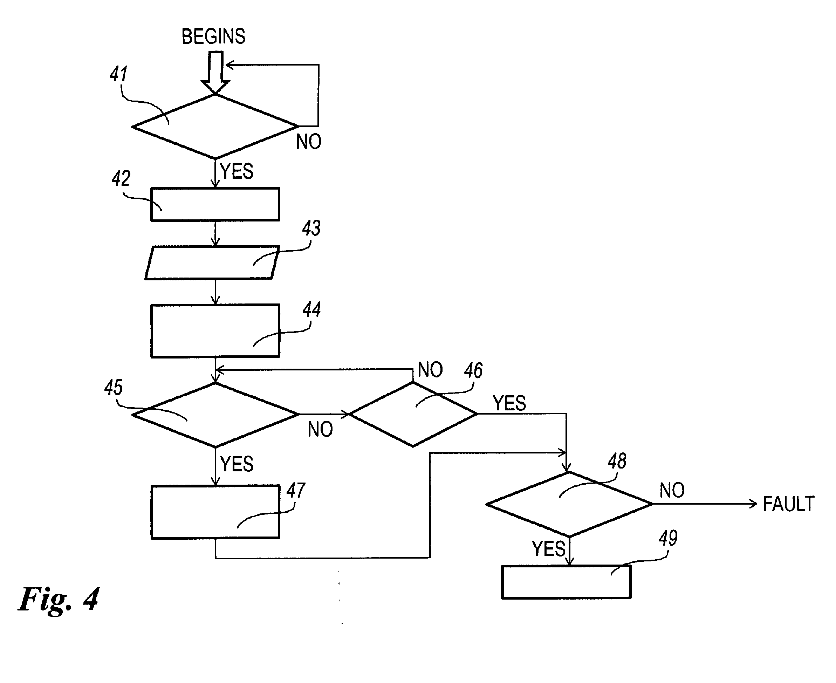

Through the low pressure second stage 15, the pressure is further reduced and regulated at a pressure the value Pᵣₐᵢₗ of which is variable according to the engine load conditions and hence to the pressure P_{MAP} present in the intake manifold. As a non-limiting example this pressure can be about 2 bar absolute when the engine operates at high loads, and just above 1 bar absolute when the engine is idling. The diagnostic method according to the invention is shown on the flow diagram of Figure 4. Having verified the presence of precise conditions for initiating the verification stage (block 41), the command and control unit 8 switches the vehicle operation from gaseous fuel to liquid fuel, and closes the solenoid valve 4 to shut off the gaseous fuel (block 42). It will also be assumed that the vehicle is accelerating.

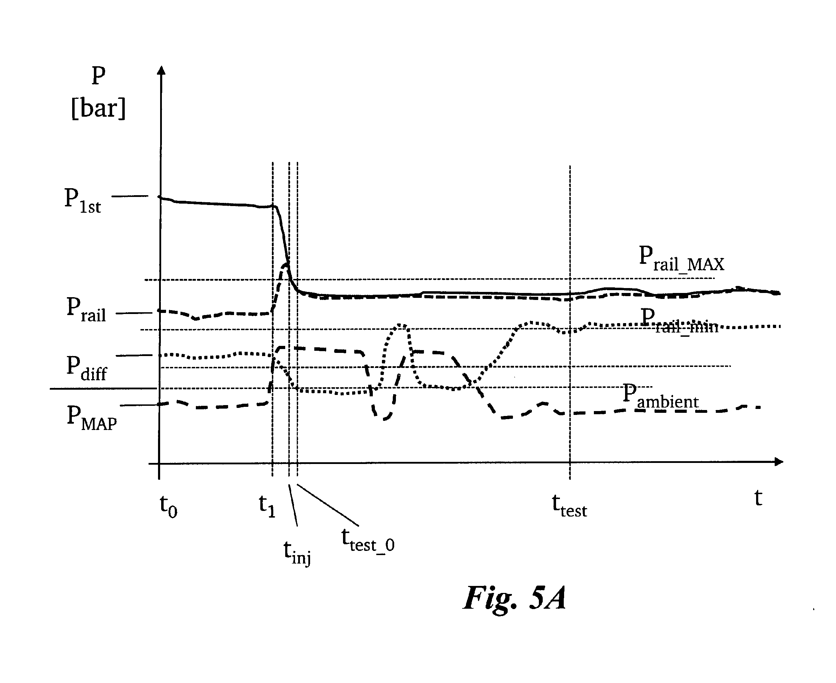

Under these conditions and with reference to Figure 5a, the different pressure variations within the branches 3 and 7 and in the usual intake manifold of the engine M can be determined, this latter value being verified by a known sensor present thereat (not shown) and connected to the command and control unit 8. This figure shows the variations of the:
- pressure in the first stage 9 (P₁ₛₜ)
- pressure in the branch 7, corresponding to the pressure at the outlet of the second stage 15 (Pᵣₐᵢₗ)
- pressure in the intake manifold (P_{MAP})
- estimated pressure differential P_{diff} = (Pᵣₐᵢₗ - P_{MAP}).

During acceleration, the manifold pressure increases, as does the pressure of the gaseous fuel to the second stage 15 (Pᵣₐᵢₗ).

At the time t1 when the manifold pressure (P_{MAP}) exceeds a predetermined pressure and the solenoid shutoff valve is closed (block 42) there is no further outflow of fuel in the liquid state from the tank. In this situation, the command and control unit 8 measures and memorizes the pressure Pᵣₐᵢₗ.

Although the solenoid shutoff valve is closed, the gaseous fuel injectors 5 continue to inject gas into the cylinders of the engine M and the pressure in the first stage 9 begins to decrease as the interconnection valve between the two stages 13 is open, as already described (block 43 of Figure 4).

This results in equilibrium between the high pressure stage 9 and low pressure stage 15, which tend to attain an intermediate pressure (measured by 6) between the initial first stage pressure (P₁ₛₜ) and the second stage pressure (Pᵣₐᵢₗ). After a time of the order of some milliseconds, the gas injectors are closed (time tᵢₙⱼ, block 44 of Figure 4) and the engine is fed with liquid fuel. In this equilibrium state with the circuit isolated, the algorithm for measuring the fuel leakage identified at that instant by time tₜₑₛₜ₀ can be started (block 45 of Figure 4), provided that the following summarized conditions are verified:
- pressure value in range between two end values (P_{rail-Max} and Pᵣₐᵢₗ₋ₘᵢₙ), to ensure absence of possible transients;
- pressure value at a pressure sufficiently higher than that of the external environment such as to have the conditions for measuring a fuel leakage accurately and quickly.

Moreover to ensure that the interconnection valve between the two stages of the two stage reducer is definitely open, the pressure differential evaluated by the command and control unit 8 (P_{diff}) must be less than a predefined valve corresponding to the valve open.

To these conditions there must however be preliminarily added at least one of the following (which anticipate those indicated above):
- that the vehicle has been operating with gaseous fuel feed for a certain time (typically 2-8 seconds, preferably 5 seconds) such as to ensure the absence of transients due to a recent switch between liquid fuel operation and gaseous fuel operation;
- that the temperature of the reducer 1, measured indirectly by the engine water temperature sensor 14, is sufficiently high; this is achieved for example by measuring the engine cooling water temperature and verifying that this is higher than a predefined threshold (typically in the range 80-90°C);
- that, if the cooling water temperature at the moment of engine start-up lies between two limiting threshold values (typically 15°C-40°C), a time has preferably passed (for example, for the European market about 20 minutes) during which the engine emissions are conventionally measured;
- that the engine r.p.m. is preferably less than a limit (typically at least 3500 r.p.m.) such as to ensure that the engine is not operating at very high r.p.m.

The diagnosis can be carried out only if the aforestated conditions are verified. These conditions are verified in block 45 and block 46 (with regard to the aforesaid times) of Figure 4.

In a modified implementation of the diagnostic procedure according to the invention, the pressure of the low pressure circuit (Pᵣₐᵢₗ) at the moment of starting the fuel leakage measurement algorithm can be merely greater than a predefined minimum (Pᵣₐᵢₗ_ₘᵢₙ), without maximum pressure constraints.

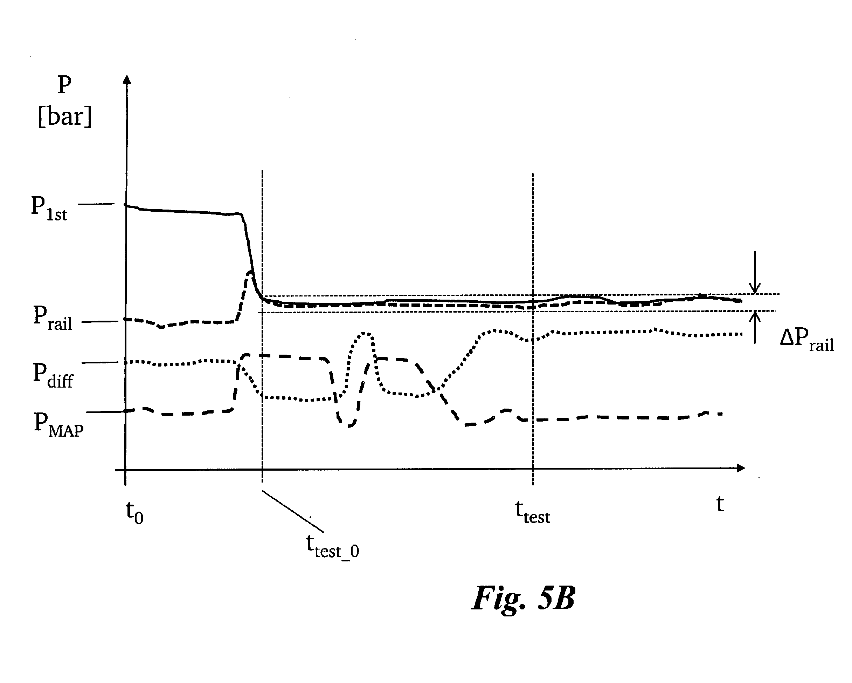

With these conditions, the command and control unit 8 measures the fuel leakage (block 47) and verifies any pressure reduction (Pᵣₐᵢₗ) within a predetermined time (tₜₑₛₜ) of the order of a few seconds (for example between 5 and 10). If, as shown in Figure 5b, the pressure reduction relative to the value measured at the moment t_{test_0} is not less than a predefined threshold (ΔPᵣₐᵢₗ), a leakage is not determined (i.e. the diagnosis has given a positive result, block 48 of Figure 4) and the procedure is halted, engine operation with gaseous fuel feed then being restored (block 49).

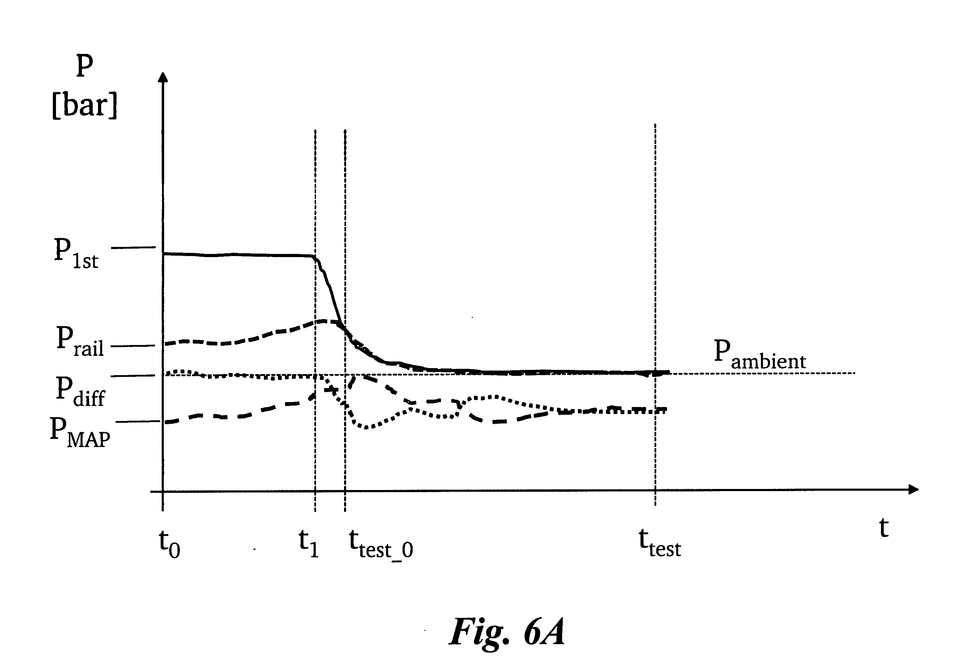

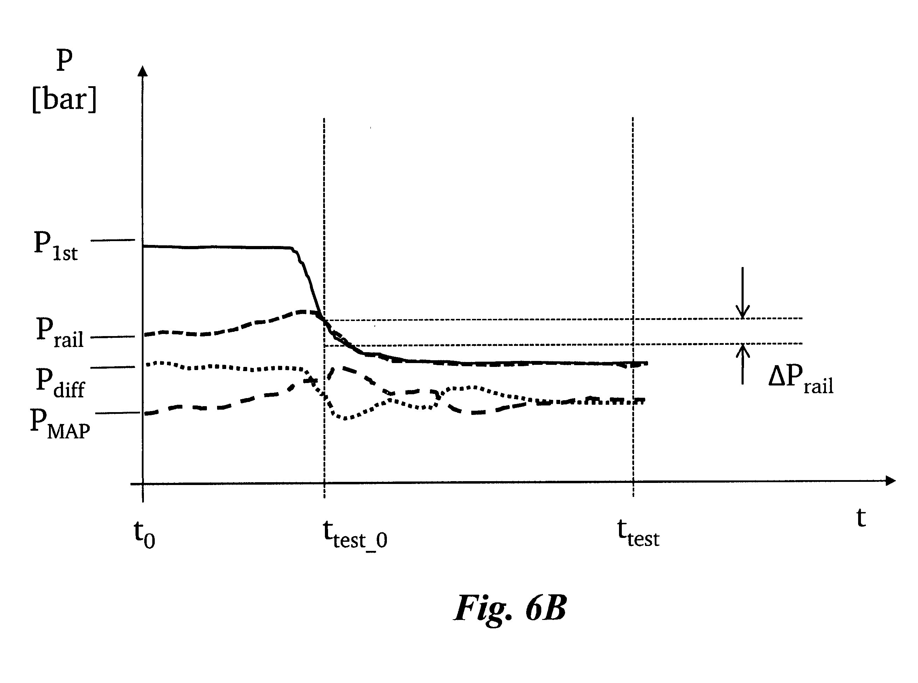

Figure 6a shows the variations of the various pressures if the circuit has been damaged and there is therefore a gaseous fuel leakage (for example in the branch 7). In this case the circuit pressure does not stabilize around a substantially constant value as in the case described in Figures 5a and 5b but, because of the leakages, decreases progressively. Under these conditions, as described in Figure 6b, the command and control unit 8 which measures the fuel leakage verifies the pressure decrease (ΔPᵣₐᵢₗ) within the predetermined time (tₜₑₛₜ) of the order of some seconds; if this decrease exceeds the predefined threshold, the leakage is noted and the procedure is halted.

In this manner the diagnostic procedure according to the invention is started when it is certain that the two stages of the two stage reducer are hydraulically connected together and hence, if any pressure reduction (ΔPᵣₐᵢₗ) exceeds a predetermined threshold value, a gas leakage in the first stage and in the second stage of the reducer is correctly diagnosed.

To reduce the consumption of liquid fuel (petrol, ethanol, petrol-ethanol mixture, etc.) to a minimum during the test, a preferred method of implementing the procedure of the invention is to effect diagnosis only once for each vehicle journey, where "journey" means the period between an engine start and the next engine shut off. An alternative manner of implementing the procedure of the invention is to effect the diagnosis by repeating it several times within the same journey; to reduce liquid fuel consumption to a minimum, the repetition can be effected only after a sufficiently lengthy time, of the order of some tens of minutes or of some hours.

This configuration of the diagnosis procedure enables pressure leakage measurements to be taken even if the predetermined time (tₜₑₛₜ) within which the measurement takes place is not consecutive but can be obtained as a sum of time fractions in which P_{diff} exceeds the threshold value such as to ensure that the interconnection valve between the two stages of the two stage reducer is definitely open; these time fractions are characterised by having an individual duration less than the predetermined time tₜₑₛₜ. In this manner the diagnosis procedure can be concluded even in situations in which the engine acceleration is briefly interrupted for a few seconds for each gear change.

With this implementation method, extremely flexible driving conditions can be ensured appropriate for carrying out the diagnosis procedure, such that the diagnosis procedure can be implemented not only when the vehicle runs at high engine loads for fairly lengthy times, but also under town driving conditions characterised by the presence of short accelerations, gear changes and frequent idling stoppages, for example in proximity to traffic lights.

However, in both cases the test is carried out while maintaining a high pressure in the circuit under evaluation; for this reason and to limit test times the engine must be delivering power, i.e. is accelerating. In this respect, if the engine is under idling operating conditions, the pressure in the conduit is only slightly above atmospheric pressure, hence any gas leakage can be diagnosed only if the leakage is significantly large.

The diagnosis information obtained can be used both to indicate to the driver an irregularity which causes a leakage of gaseous fuel from the first reducer stage, and to force the electronic control unit 8 to switch engine operation exclusively to liquid fuel.

The characteristics and advantages of the invention are apparent from the description, they being mainly represented by simplicity and constructional economy by not requiring components additional to the circuit for feeding fluid gaseous fuel to an engine. Moreover, by carrying out the diagnosis during an acceleration, the times for its implementation are very short, even though enabling a reliable evaluation of any gas leakages both in the high pressure branch 3 and in the low pressure branch 7.

Other embodiments of the invention are possible while remaining within the scope of the invention as defined by the ensuing claims.

## Claims

1. A method for the diagnosis of gaseous fluid leakages in a circuit feeding gaseous fuel, whether consisting of LPG, CNG (methane), H2 (hydrogen) or mixtures of these gases, into an internal combustion engine (M) through at least one corresponding injector (5), said circuit comprising in addition to said injector (5) a tank (2) for said fluid in which it is contained at high pressure, a reducer member (1) for said pressure which is disposed in a connection line between said tank and said injector and which divides it into a high pressure branch (3) and a low pressure branch (7), there being disposed in said line upstream of the reducer member a controlled valve member (4) to interrupt the fluid flow to the injector (5) and a pressure measurement device (6) positioned in the low pressure branch (7), said measurement device (6), each injector (5) and said valve member (4) being connected to a command and control unit (8), said method comprising closing the valve member (4), closing each injector (5) and evaluating the variation of the fluid pressure in the line with time by means of said measurement device (6) in order to determine any leakages of said circuit downstream of the valve member, **characterised in that** said evaluation is carried out during a phase in which the engine (M) is under acceleration, the reducer member being a two stage reducer.

2. A method as claimed in claim 1, **characterised in that** the closure of each injector takes place after a time of the order of some milliseconds after the closure of the valve member (4).

3. A method as claimed in claim 1, **characterised in that** before activating the gaseous fuel leakage diagnosis, it is verified that at least one of the following preliminary characteristics exists:
a. that the vehicle has been operating with gaseous fuel feed for a certain time such as to ensure the absence of transients due to a recent switch between liquid fuel operation and gaseous fuel operation;
b. that the temperature of the reducer member (1) is sufficiently high, by measuring the engine cooling water temperature and verifying that this is higher than a predefined threshold;
c. that, if the cooling water temperature at the moment of engine start lies between two limiting threshold values, a time has preferably passed during which the engine emissions are conventionally measured;
d. that the engine r.p.m. is preferably less than a limiting value such as to ensure that the engine is not operating at very high r.p.m.

4. A method as claimed in claim 3, **characterised in that**:
- the time period of point a) is typically 2-8 seconds, preferably 5 seconds;
- the water temperature threshold of point b) is 80-90 °C;
- the two limiting thresholds of point c) are respectively 15°C and 40°C, the emission measurement time being at least 15-18 minutes;
- the r.p.m. value of point d) is at least equal to 3500 r.p.m.

5. A method as claimed in claims 1 and 3, **characterised in that** the leakage diagnosis comprises the following preliminary steps:
i) verifying the existence of at least one of the preliminary characteristics;
ii) closing the valve member (4) and simultaneously switching the operation of the engine (M) to liquid fuel, such as petrol, petrol/ethanol mixture or ethanol;
iii) verifying that the usual two stages (9, 10) of the reducer member (1) are in communication.

6. A method as claimed in claim 5, **characterised by** also comprising the following steps:
A) measuring the pressure (Pᵣₐᵢₗ) in the low pressure branch (7) after closing the valve member (4) and
B) memorizing said measurement and continuing to verify the variation in its value for a predetermined time, this latter being of the order of a few seconds, such as 5-10 seconds;
C) if the variation in said pressure (Pᵣₐᵢₗ) exceeds a predefined threshold, a pressure leakage in the feed circuit is diagnosed.

7. A device for implementing the method claimed in claim 1 for the diagnosis of gaseous fluid leakages in a fuel feed circuit of a vehicle internal combustion engine (M), said fluid being fed in gaseous form into each cylinder of the engine (M) through at least one corresponding injector (5), said circuit comprising in addition to said injector (5) a tank (2) for said fluid in which it is contained at high pressure, a reducer member (1) for said pressure which is disposed in a connection line between said tank and said injector and which divides it into a high pressure branch (3) and a low pressure branch (7), there being disposed in said line upstream of the reducer member a controlled valve member (4) to interrupt the fluid flow to the injector (5) and a pressure measurement device (6) positioned in the low pressure branch (7), said measurement device (6), each injector (5) and said valve member (4) being connected to a command and control unit (8) adapted to evaluate the variation of the line fluid pressure with time by means of said measurement device (6) in order to determine possible leakages in said circuit, **characterised by** comprising, for sensing the pressure of the gaseous fluid feed to the engine, means connected to the command and control unit (8) and arranged to enable this latter to sense an acceleration phase of the engine (M), said unit implementing said leakage diagnosis in this phase, said reducer member (1) being of the two stage type.

## Patentansprüche

1. Verfahren für die Diagnose von gasförmigen Flüssigkeitsleckagen, egal ob bestehend aus LPG, CNG (Erdgas), H2 (Wasserstoff) oder einer Mischung dieser Gase, in einem Kreislauf zur Zufuhr von Kraftstoff in einen internen Verbrennungsmotor (M) durch mindestens eine entsprechende Kraftstoffdüse (5), wobei dieser Kreislauf zusätzlich zur Kraftstoffdüse (5) einen Tank (2) für diese Flüssigkeit umfasst, in dem diese bei hohem Druck enthalten ist, sowie ein Reduzierelement (1) für diesen Druck, das in einer Verbindungsleitung zwischen dem Tank und der Kraftstoffdüse angeordnet ist und diese in einen Hochdruckabschnitt (3) und einen Niederdruckabschnitt (7) trennt, wobei in dieser Leitung vor dem Reduzierelement ein geregeltes Ventilelement (4) angeordnet ist, um den Flüssigkeitsstrom zur Kraftstoffdüse (5) zu unterbrechen, sowie eine Druckmessvorrichtung (6), positioniert im Niederdruckabschnitt (7), wobei diese Messvorrichtung (6), eine jede Kraftstoffdüse (5) und das Ventilelement (4) mit einer Schalt- und Steuerungseinheit (8) verbunden sind, wobei das Verfahren das Schließen des Ventilelements (4), das Schließen einer jeden Kraftstoffdüse (5) und das Bewerten der zeitlichen Veränderung des Flüssigkeitsdrucks in der Leitung mittels der Messvorrichtung (6) umfasst, um Leckagen des Kreislaufs nach dem Ventilelement zu ermitteln, **dadurch gekennzeichnet, dass** diese Bewertung während einer Phase durchgeführt wird, in der der Motor (M) beschleunigt wird, wobei es sich beim Reduzierelement um einen zweistufigen Reduzierer handelt.

2. Verfahren nach Anspruch 1, **dadurch gekennzeichnet, dass** das Schließen einer jeden Kraftstoffdüse nach einem Zeitraum von einigen Millisekunden nach dem Schließen des Ventilelements (4) erfolgt.

3. Verfahren nach Anspruch 1, **dadurch gekennzeichnet, dass** vor dem Aktivieren der Diagnose von gasförmigen Kraftstoffleckagen sichergestellt wird, dass mindestens eine der folgenden Voraussetzungen erfüllt ist:
a) Das Fahrzeug wurde für einen gewissen Zeitraum mit gasförmiger Kraftstoffzufuhr betrieben, sodass gewährleistet wird, dass keine Transienten aufgrund einer kürzlich erfolgten Umschaltung zwischen Flüssigkraftstoffbetrieb und Gaskraftstoffbetrieb vorhanden sind.
b) Die Temperatur des Reduzierelements (1) ist ausreichend hoch, was durch Messen der Motorkühlwassertemperatur und Prüfen, ob diese über einem vorgegebenen Schwellenwert liegt, sichergestellt wird.
c) Wenn die Kühlwassertemperatur zum Zeitpunkt des Motorstarts zwischen zwei Grenzschwellenwerten liegt, ist vorzugsweise ein Zeitraum vergangen, in dem die Motoremissionen auf herkömmliche Weise gemessen wurden.
d) Die Motordrehzahl liegt vorzugsweise unter einem Grenzwert, sodass sichergestellt wird, dass der Motor nicht bei einer sehr hohen Drehzahl arbeitet.

4. Verfahren nach Anspruch 3, **dadurch gekennzeichnet, dass**
- der Zeitraum gemäß Punkt a) normalerweise 2 bis 8 Sekunden, vorzugsweise 5 Sekunden, beträgt;
- der Wassertemperaturschwellenwert gemäß Punkt b) 80 bis 90 °C beträgt;
- die zwei Grenzschwellenwerte gemäß Punkt c) jeweils 15 °C bzw. 40 °C betragen und die Emissionsmesszeit mindestens 15 bis 18 Minuten beträgt;
- der Drehzahlwert gemäß Punkt d) mindestens gleich 3500 U/min. beträgt.

5. Verfahren nach Anspruch 1 und 3, **dadurch gekennzeichnet, dass** die Leckagendiagnose die folgenden einleitenden Schritte umfasst:
i) Prüfen des Vorliegens mindestens einer der Voraussetzungen;
ii) Schließen des Ventilelements (4) und gleichzeitiges Umschalten des Motorbetriebs (M) auf Flüssigkraftstoff wie Benzin, Benzin-Ethanol-Gemisch oder Ethanol;
iii) Sicherstellen, dass die gewöhnlichen zwei Stufen (9, 10) des Reduzierelements (1) in Kommunikation sind.

6. Verfahren nach Anspruch 5, **dadurch gekennzeichnet, dass** es auch folgende Schritte umfasst:
A) Messen des Drucks (Pᵣₐᵢₗ) im Niederdruckabschnitt (7) nach dem Schließen des Ventilelements (4) und
B) Speichern dieses Messwerts und Weiterführung der Prüfung der Änderung dieses Werts für einen vorgegebenen Zeitraum, wobei Letzterer einige Sekunden wie 5 bis 10 Sek. beträgt.
C) Wenn die Änderung dieses Drucks (Pᵣₐᵢₗ) einen vorgegebenen Schwellenwert überschreitet, wird ein Druckverlust im Zufuhrkreislauf diagnostiziert.

7. Vorrichtung zur Implementierung des Verfahrens nach Anspruch 1 für die Diagnose von gasförmigen Flüssigkeitsleckagen in einem Kraftstoffzufuhrkreislauf eines internen Verbrennungsmotors (M) eines Fahrzeugs, wobei diese Flüssigkeit in Gasform in jeden Zylinder des Motors (M) durch mindestens eine entsprechende Kraftstoffdüse (5) eingespeist wird, wobei dieser Kreislauf zusätzlich zur Kraftstoffdüse (5) einen Tank (2) für diese Flüssigkeit umfasst, in dem diese bei hohem Druck enthalten ist, sowie ein Reduzierelement (1) für diesen Druck, das in einer Verbindungsleitung zwischen dem Tank und der Kraftstoffdüse angeordnet ist und diese in einen Hochdruckabschnitt (3) und einen Niederdruckabschnitt (7) trennt, wobei in dieser Leitung vor dem Reduzierelement ein geregeltes Ventilelement (4) angeordnet ist, um den Flüssigkeitsstrom zur Kraftstoffdüse (5) zu unterbrechen, sowie eine Druckmessvorrichtung (6), positioniert im Niederdruckabschnitt (7), wobei diese Messvorrichtung (6), eine jede Kraftstoffdüse (5) und das Ventilelement (4) mit einer Schalt- und Steuerungseinheit (8) verbunden sind, die ausgelegt ist, um die zeitliche Änderung des Drucks in der Flüssigkeitsleitung mittels der Messvorrichtung (6) zu bewerten, um mögliche Leckagen im Kreislauf zu ermitteln, **dadurch gekennzeichnet, dass** sie zum Messen des Drucks der gasförmigen Flüssigkeitszufuhr zum Motor Mittel umfasst, die mit der Schalt- und Steuerungseinheit (8) verbunden und so angeordnet sind, dass Letztere eine Beschleunigungsphase des Motors (M) erfassen kann, wobei diese Einheit die Leckagendiagnose in dieser Phase implementiert und das Reduzierelement (1) vom zweistufigen Typ ist.

## Revendications

1. Procédé pour le diagnostic de fuites de fluides gazeux dans un circuit alimentant combustible gazeux, qu'il consiste en du GPL, du GNC (méthane), de l'H2 (hydrogène) ou des mélanges de ces gaz, dans un moteur à combustion interne (M) à travers au moins un injecteur correspondant (5), ledit circuit comprenant en plus dudit injecteur (5), un réservoir (2) destiné au dit fluide dans lequel il est contenu à haute pression, un organe réducteur (1) pour ladite pression étant disposé dans une conduite de raccordement entre ledit réservoir et ledit injecteur et qui la sépare en une branche à haute pression (3) et une branche à basse pression (7), un élément à clapet de commande (4) étant disposé dans ladite conduite en amont de l'organe réducteur pour interrompre l'écoulement de fluide à l'injecteur (5) et un dispositif de mesure de pression (6) positionné dans la branche à faible pression (7), ledit dispositif de mesure (6), chaque injecteur (5) et ledit élément à clapet (4) étant raccordés à une unité de commande et de contrôle (8), ledit procédé comprenant la fermeture de l'élément à clapet (4), la fermeture de chaque injecteur (5) et l'évaluation de la variation de la pression du fluide dans la conduite au fil du temps par le biais dudit dispositif de mesure (6) afin de déterminer toute fuite dudit circuit en aval de l'élément à clapet, **caractérisé en ce que** ladite évaluation est effectuée lors d'une phase dans laquelle le moteur (M) est en phase d'accélération, l'organe réducteur étant un réducteur double étage.

2. Procédé selon la revendication 1, **caractérisé en ce que** la fermeture de chaque injecteur se déroule après un laps de temps de l'ordre de quelques millisecondes après la fermeture de l'élément à clapet (4).

3. Procédé selon la revendication 1, **caractérisé en ce que** avant l'activation du diagnostic de fuite de combustible gazeux, il est vérifié qu'au moins une des caractéristiques préliminaires suivantes existe :
a. que le véhicule a fonctionné avec une alimentation en combustible gazeux pendant une certaine durée de manière à garantir l'absence de phénomènes transitoires dus au passage récent entre le fonctionnement par combustible liquide et le fonctionnement par combustible gazeux ;
b. que la température de l'organe réducteur (1) est suffisamment élevée, en mesurant la température de l'eau de refroidissement du moteur et en vérifiant que celle-ci est supérieure à un seuil prédéfini ;
c. que, si la température de l'eau de refroidissement au moment du démarrage du moteur se situe entre deux valeurs seuils limites, qu'un laps de temps soit de préférence passé durant lequel les émissions du moteur sont conventionnellement mesurées ;
d. que le nombre de tours du moteur est de préférence inférieur à une valeur limite de manière à s'assurer que le moteur ne fonctionne pas à un régime très élevé.

4. Procédé selon la revendication 3, **caractérisé en ce que** :
- le laps de temps au point a) est typiquement de 2 à 8 secondes, de préférence 5 secondes ;
- le seuil de la température de l'eau au point b) est de 80 à 90 °C ;
- les deux seuils limites au point c) sont respectivement de 15 °C et 40 °C, la durée de mesure de l'émission étant d'au moins 15 à 18 minutes ;
- la valeur des t/m au point d) est au moins égale à 3500 t/m.

5. Procédé selon les revendications 1 et 3, **caractérisé en ce que** le diagnostic de fuite comprend les étapes préliminaires suivantes :
i) vérification de l'existence d'au moins une des caractéristiques préliminaires ;
ii) fermeture de l'élément à clapet (4) et passage simultané du fonctionnement du moteur (M) à un combustible liquide, tel que l'essence, essence/mélange d'éthanol ou éthanol ;
iii) vérification que les deux étages (9, 10) habituels de l'organe réducteur (1) sont en communication.

6. Procédé selon la revendication 5, **caractérisé en ce qu'**il comprend aussi les étapes suivantes :
A) mesure de la pression (Pᵣₐᵢₗ) dans la branche à basse pression (7) après fermeture de l'élément à clapet (4) et
B) mémorisation de ladite mesure et continuer à vérifier la variation de sa valeur pendant une durée déterminée, cette dernière étant de l'ordre de quelques secondes, telles que 5 à 10 secondes ;
C) si la variation dans ladite pression (Pᵣₐᵢₗ) excède un seuil prédéfini, une fuite de pression dans le circuit d'alimentation est diagnostiquée.

7. Dispositif servant à la mise en place du procédé revendiqué à la revendication 1 destiné au diagnostic de fuites de fluides gazeux dans un circuit d'alimentation en carburant d'un moteur (M) à combustion interne de véhicule, ledit fluide étant alimenté sous forme de gaz dans chaque cylindre du moteur (M) à travers au moins un injecteur correspondant (5), ledit circuit comprenant en plus dudit injecteur (5), un réservoir (2) pour ledit fluide dans lequel il est contenu à haute pression, un organe réducteur (1) pour ladite pression étant disposé dans une conduite de raccordement entre ledit réservoir et ledit injecteur et qui la divise en une branche à haute pression (3) et une branche à basse pression (7), un élément à clapet de commande (4) étant placé dans ladite conduite en amont de l'organe réducteur pour interrompre l'écoulement de fluide à l'injecteur (5) et un dispositif de mesure de pression (6) positionné dans la branche à faible pression (7), ledit dispositif de mesure (6), chaque injecteur (5) et ledit élément à clapet (4) étant reliés à une unité de commande et de contrôle (8) adaptée pour évaluer la variation de la pression du fluide de la conduite au fil du temps par le biais dudit dispositif de mesure (6) afin de déterminer toute fuite possible dans ledit circuit, **caractérisé en ce qu'**il comprend, pour détecter la pression de l'alimentation en fluide gazeux au moteur, des moyens reliés à l'unité de commande et de contrôle (8) et disposés pour permettre à cette dernière de détecter une phase d'accélération du moteur (M), ladite unité mettant en place ledit diagnostic de fuite lors de cette phase, ledit organe réducteur (1) étant de type à double étage.
